# EUROPÄISCHE PATENTANMELDUNG

(11) **EP 4 782 084 A1**
(43) Veröffentlichungstag der Anmeldung: **29.07.2026**
(21) Anmeldenummer: 25155707.0
(22) Anmeldetag: 04.02.2025
(51) Int. Cl.: B01D 53/00, C01B 23/00, F25J 3/00

(54) **VERFAHREN UND ANLAGE ZUR BEARBEITUNG EINES KRYPTON, XENON, METHAN UND SAUERSTOFF ENTHALTENDEN EINSATZGEMISCHS**

(30) Priorität: 24.01.2025 EP 25153833
(71) Anmelder: Linde GmbH, 82049 Pullach (DE)
(72) Erfinder: Grahl, Matthias, 80639 München (DE); Salazar Duarte, Gabriel, 80804 München (DE); Meilinger, Matthias, 82515 Wolfratshausen (DE); Hermann, Christian, 82538 Geretsried (DE); Rieche, Paula, 82049 Pullach (DE)
(74) Vertreter: Grundner, Sebastian

(57) **Zusammenfassung**

Ein Verfahren zum Bearbeiten eines Krypton, Xenon, Methan und Sauerstoff enthaltenden Einsatzgemischs (1) wird vorgeschlagen, wobei eine Katalyseanordnung (110), eine Adsorptionsanordnung (120) mit zwei Adsorberbehältern (201, 202) und eine Rektifikationsanordnung (130) verwendet wird, wobei jeder der Adsorberbehälter (201, 202) nacheinander in einem ersten Betriebsmodus, einem zweiten Betriebsmodus, einem dritten Betriebsmodus und einem vierten Betriebsmodus betrieben wird, die Adsorberbehälter (201, 202) derart zeitlich versetzt zueinander betrieben werden, dass immer dann einer der Adsorberbehälter (201, 202) in dem zweiten Betriebsmodus betrieben wird, wenn der andere der Adsorberbehälter (201, 202) in dem vierten Betriebsmodus betrieben wird, dem Adsorberbehälter (201, 202) in dem ersten Betriebsmodus Gas aus der Katalyseanordnung (110) zugeführt wird und Gas entnommen wird, das der Rektifikationsanordnung (130) zugeführt wird, dem Adsorberbehälter (201, 202) in dem zweiten Betriebsmodus Gas aus dem anderen Adsorberbehälter (201, 202) zugeführt wird und Gas entnommen wird, das der Rektifikationsanordnung (130) zugeführt wird, dem Adsorberbehälter (201, 202) in dem dritten Betriebsmodus ein Regeneriergas (R) zugeführt wird und Gas entnommen wird, das nicht der Rektifikationsanordnung (130) zugeführt wird, dem Adsorberbehälter (201, 202) in dem vierten Betriebsmodus Gas aus der Katalyseanordnung (110) zugeführt wird und Gas entnommen wird, das dem anderen Adsorberbehälter (201, 202) zugeführt wird. Eine entsprechende Anlage (100) wird ebenfalls vorgeschlagen.

## Beschreibung

Die vorliegende Offenbarung betrifft ein Verfahren und eine Anlage zur Bearbeitung eines Krypton, Xenon, Methan und Sauerstoff enthaltenden Einsatzgemischs.

### Hintergrund

Die Herstellung von Luftprodukten in flüssigem oder gasförmigem Zustand durch kryogene Luftzerlegung in Luftzerlegungsanlagen ist bekannt und umfangreich in der Fachliteratur beschrieben. Statt vieler kann auf H.-W. Häring (Hrsg.), "Industrial Gases Processing", Wiley-VCH, 3006, insbesondere Abschnitt 2.2.5, "Cryogenic Rectification" verwiesen werden. Sofern nicht ausdrücklich abweichend definiert, haben die nachstehend verwendeten Begriffe die in der Fachliteratur übliche Bedeutung.

Die Edelgase Krypton und Xenon, die in atmosphärischer Luft in Konzentrationen von etwa 1 ppm und 0,09 ppm (Millionstel Anteile) enthalten sind, können durch die Verarbeitung größerer Luftmengen in Luftzerlegungsanlagen gewonnen werden. Die Siedetemperaturen von Krypton und Xenon liegen deutlich über den Siedetemperaturen von Stickstoff und Sauerstoff. Krypton und Xenon reichern sich daher zusammen mit Kohlenwasserstoffen in flüssigem Sauerstoff in den üblicherweise verwendeten Rektifikationskolonnen an. Bei der Herstellung von Krypton- und/oder Xenonprodukten erfolgt eine Anreicherung, um hierdurch ein Krypton/Xenon-Gemisch zu erhalten, und die Trennung dieses Gemischs, wie unten näher erläutert.

Ziel der vorliegenden Erfindung ist es, die Verarbeitung von Krypton und Xenon enthaltenden Gemischen zu verbessern und insbesondere den Verlust and Krypton und Xenon zu reduzieren.

### Übersicht

Vor diesem Hintergrund werden ein Verfahren und eine Anlage zur Bearbeitung eines Krypton, Xenon, Methan und Sauerstoff enthaltenden Einsatzgemischs mit den Merkmalen der unabhängigen Ansprüche vorgeschlagen. Ausgestaltungen sind Gegenstand der abhängigen Ansprüche und der nachstehenden Erläuterungen.

Das vorgeschlagene Verfahren zum Bearbeiten eines Krypton, Xenon, Methan und Sauerstoff enthaltenden Einsatzgemischs umfasst die Verwendung einer Katalyseanordnung, einer Adsorptionsanordnung mit zwei Adsorberbehältern und einer Rektifikationsanordnung. Jeder der Adsorberbehälter wird nacheinander in einem ersten Betriebsmodus, einem zweiten Betriebsmodus, einem dritten Betriebsmodus und einem vierten Betriebsmodus betrieben. Die Adsorberbehälter werden derart zeitlich versetzt zueinander betrieben, dass immer dann einer der Adsorberbehälter in dem zweiten Betriebsmodus betrieben wird, wenn der andere der Adsorberbehälter in dem vierten Betriebsmodus betrieben wird.

Dem Adsorberbehälter wird in dem ersten Betriebsmodus Gas aus der Katalyseanordnung zugeführt und Gas entnommen, das der Rektifikationsanordnung zugeführt wird. Dem Adsorberbehälter wird in dem zweiten Betriebsmodus Gas aus dem anderen Adsorberbehälter zugeführt und Gas entnommen, das ebenfalls der Rektifikationsanordnung zugeführt wird. Dem Adsorberbehälter wird in dem dritten Betriebsmodus ein Regeneriergas zugeführt und Gas entnommen, das nicht der Rektifikationsanordnung zugeführt wird. Dem Adsorberbehälter wird in dem vierten Betriebsmodus Gas aus der Katalyseanordnung zugeführt und Gas entnommen, das dem anderen Adsorberbehälter zugeführt wird.

Das vorgeschlagene Verfahren beruht insbesondere auf der Erkenntnis, dass in der Adsorptionsanordnung bei der Regeneration herkömmlicherweise ein nennenswerter Anteil an Produkt, insbesondere Xenon, aber auch Krypton, verloren geht. Dieser Verlust kommt insbesondere bei einem Wechsel von einem Adsorberbehälter zum anderen zum Tragen. Die Edelgasverluste wurden kürzlich durch Messungen in einer realen Produktionsanlage bestätigt, wie unten genauer erläutert.

Die Verluste an Krypton und Xenon in herkömmlichen Verfahren resultieren daraus, dass während des Adsorptionsmodus neben den erwünschten Adsorbaten Wasser und Kohlendioxid auch eine gewisse Menge von Krypton und Xenon auf dem Adsorbens adsorbiert. Diese Wertstoffe gehen ohne weitere Maßnahmen beim Regenerieren der Adsorberbehälter verloren. Es entstehen Ausbeuteverluste in der Größenordnung von 5 bis 7%. Durch das vorgeschlagene Verfahren wird daher die Wirtschaftlichkeit des Gesamtverfahrens erhöht, da derartige Verluste vermindert werden.

Der erste Betriebsmodus in dem vorgeschlagenen Verfahren entspricht im Wesentlichen einem üblichen Adsorptionsbetrieb auf einem Adsorptionsdruck, der nachfolgend auch als ein "erstes Druckniveau" bezeichnet wird. Der dritte Betriebsmodus entspricht im Wesentlichen einem üblichen Regenerationsbetrieb auf einem Regenerationsdruck, insbesondere einem atmosphärischen Druck, der nachfolgend auch als ein "zweites Druckniveau" bezeichnet wird.

Durch den im Rahmen des vorgeschlagenen Verfahrens zwischenzeitlichen Reihenbetrieb beider Adsorberbehälter in dem zweiten und vierten Betriebsmodus zwischen dem Adsorptions- und Regenerationsbetrieb wird der Verlust von Xenon und Krypton ins Regeneriergas fast vollständig vermieden. Dabei wird das Feedgas, d.h. das Gas aus der Katalyseanordnung, dem im vierten Betriebsmodus befindlichen Adsorptionsbehälter zugeführt, und anschließend, in gleicher Richtung, über den beladenen, aber noch nicht entspannten Adsorberbehälter, der sich im zweiten Betriebsmodus befindet. Adsorbiertes Xenon und Krypton in dem Adsorberbehälter, der sich im zweiten Betriebsmodus befindet, wird auf diese Weise aus dem beladenen in Richtung der nachgeschalteten Rektifikationsanordnung verdrängt.

Das Gas aus der Katalyseanordnung enthält zumindest Krypton, Xenon, Wasser und Kohlendioxid, wobei eine Dauer des zweiten Betriebsmodus und des vierten Betriebsmodus derart bemessen werden, dass das in dem zweiten Betriebsmodus aus der Rektifikationsanordnung zugeführte Gas weniger als eine vorgegebene Menge an Wasser und Kohlendioxid aufweist. Mit anderen Worten wird der zweite Betriebsmodus nur höchstens so lange durchgeführt, bis die leichter desorbierenden Komponenten Krypton und insbesondere Xenon aus dem im zweiten Betriebsmodus befindlichen Adsorberbehälter verdrängt sind, aber Kohlendioxid und Wasser noch nicht desorbieren. Die vorgegebene Menge an Kohlendioxid und Wasser kann auch im Wesentlichen Null sein bzw. kann ein entsprechend niedriger Wert gewählt werden.

Die Dauer des zweiten Betriebsmodus und des vierten Betriebsmodus kann auch insbesondere derart bemessen werden, dass Xenon in weniger als einer vorgegebenen Menge zwischen den Adsorberbehältern übertragen wird. Auf diese Weise kann sichergestellt werden, dass das übertragene Gas im Wesentlichen Sauerstoff aufweist und daher kein nicht mehr adsorbierbares Xenon aus dem regenerierten Adsorberbehälter in dem vierten Betriebsmodus in den beladenen Adsorberbehälter im zweiten Betriebsmodus übertragen wird. Wie festgestellt werden konnte, kann die Dauer des vierten Betriebsmodus so gewählt werden, dass Xenon, und zu Teilen auch Krypton, im Wesentlichen vollständig in dem im vierten Betriebsmodus betriebenen Adsorberbehälter zurückgehalten wird bzw. werden.

Zweckmäßigerweise ist die die Dauer des zweiten Betriebsmodus identisch zur Dauer des vierten Betriebsmodus, so dass diese Betriebsmodi in der erläuterten Weise durchgeführt werden können.

Eine Ermittlung der Dauer des zweiten Betriebsmodus und des vierten Betriebsmodus kann insbesondere auf Grundlage einer Messung eines Gehalts von Xenon, Kohlendioxid und/oder Wasser erfolgen. Die Messung kann an unterschiedlichen Orten erfolgen. Beispielsweise kann in dem zweiten und vierten Betriebsmodus eine Messung zwischen den dann seriell geschalteten Adsorberbehältern gemessen werden und der zweite bzw. vierte Betriebsmodus kann beendet werden, wenn Xenon aus dem stromaufwärtigen der beiden in Reihe geschalteten Adsorber durchbricht, d.h. beispielsweise einen vorgegebenen Schwellwert überschreitet. Alternativ kann in dem zweiten und vierten Betriebsmodus am Austritt des zweiten der in Reihe geschalteten Adsorberbehälter gemessen werden und der zweite bzw. vierte Betriebsmodus dann beendet werden, wenn kein Xenon mehr ausgespült wird bzw. ein Xenongehalt einen entsprechenden Schwellwert unterschreitet. Beide Optionen können als in etwa gleichwertig angesehen werden. Alternativ oder zusätzlich ist auch eine Ermittlung der Dauer des zweiten Betriebsmodus und des vierten Betriebsmodus auf Grundlage einer rechnerischen Prognose eines Gehalts von Xenon, Kohlendioxid und/oder Wasser möglich, beispielsweise mittels einer Simulation oder auf Grundlage eines Modells der Adsorptionsanordnung.

In dem vorgeschlagenen Verfahren werden der erste, zweite und vierte Betriebsmodus insbesondere auf einem ersten Druckniveau durchgeführt, und der dritte Betriebsmodus wird auf einem zweiten Druckniveau unterhalb des ersten Druckniveaus durchgeführt. Zwischen dem zweiten und dritten Betriebsmodus ist insbesondere eine Druckentlastung und zwischen dem dritten und vierten Betriebsmodus insbesondere ein Druckaufbau vorgesehen.

In dem vorgeschlagenen Verfahren und seinen Ausgestaltungen wird insbesondere unter Verwendung der Katalyseanordnung das Methan in dem Einsatzgemisch, oder ein Teil hiervon, mit Sauerstoff zu Wasser und Kohlendioxid umgesetzt.

Das in dem ersten Betriebsmodus und in dem zweiten Betriebsmodus der Rektifikationsanordnung zugeführte Gas enthält insbesondere Sauerstoff, Krypton und Xenon und dieses Gas wird in der Rektifikationsanordnung an Sauerstoff abgereichert. Das in dem dritten Betriebsmodus nicht der Rektifikationsanordnung zugeführte Gas, oder ein Teil hiervon, kann insbesondere an die Atmosphäre abgegeben werden.

Die vorgeschlagene Anlage zum Bearbeiten eines Krypton, Xenon, Methan und Sauerstoff enthaltenden Einsatzgemischs weist eine Katalyseanordnung, eine Adsorptionsanordnung mit zwei Adsorberbehältern und eine Rektifikationsanordnung auf, wobei die Anlage dafür eingerichtet ist, jeden der Adsorberbehälter nacheinander in einem ersten Betriebsmodus, einem zweiten Betriebsmodus, einem dritten Betriebsmodus und einem vierten Betriebsmodus zu betreiben, die Adsorberbehälter derart zeitlich versetzt zueinander zu betreiben, dass immer dann einer der Adsorberbehälter in dem zweiten Betriebsmodus betrieben wird, wenn der andere der Adsorberbehälter in dem vierten Betriebsmodus betrieben wird.

Die Anlage ist dafür eingerichtet, dem Adsorberbehälter in dem ersten Betriebsmodus Gas aus der Katalyseanordnung zuzuführen sowie Gas zu entnehmen und der Rektifikationsanordnung zuzuführen, dem Adsorberbehälter in dem zweiten Betriebsmodus Gas aus dem anderen Adsorberbehälter zuzuführen sowie Gas zu entnehmen und der Rektifikationsanordnung zuzuführen, dem Adsorberbehälter in dem dritten Betriebsmodus ein Regeneriergas zuzuführen sowie Gas zu entnehmen und nicht der Rektifikationsanordnung zuzuführen, und dem Adsorberbehälter in dem vierten Betriebsmodus Gas aus der Katalyseanordnung zuzuführen sowie Gas zu entnehmen und dem anderen Adsorberbehälter zuzuführen.

Das vorgeschlagene Verfahren und seine Ausgestaltungen umfassen insbesondere, dass das Einsatzgemisch 100 bis 500 ppm, beispielsweise ca. 200 ppm, auf Volumenbasis Xenon, 1.000 bis 5.000 ppm, beispielsweise 2.500 ppm, auf Volumenbasis Krypton und mehr als 99 Volumenprozent Sauerstoff enthält. Das vorgeschlagene Verfahren und seine Ausgestaltungen eignen sich also insbesondere für die Verwendung mit typischem Roh-Krypton/Xenon aus einer kryogenen Luftzerlegung bzw. einer sogenannten C1-Einheit wie unten erläutert.

Zu weiteren Merkmalen und Vorteilen der vorgeschlagenen Anlage und ihrer Ausgestaltungen sei auf die oben erläuterten Merkmale und Vorteile des vorgeschlagenen Verfahrens und seiner Ausgestaltungen ausdrücklich verwiesen, da diese für die Anlage in im Wesentlichen gleicher Weise gelten.

Entsprechendes gilt auch für eine Anlage, die gemäß einer hier vorgeschlagenen Ausgestaltung dazu eingerichtet sein kann, ein Verfahren gemäß einer entsprechenden Ausgestaltung durchzuführen.

### Zeichnungen

Ausführungsformen werden nachfolgend rein beispielhaft unter Bezugnahme auf die beigefügte Zeichnung beschrieben, wobei
Figur 1 eine Anlage zur Bearbeitung eines Krypton und Xenon enthaltenden Einsatzgemischs veranschaulicht, die einer Ausführungsform zugrunde liegen kann;
Figuren 2A bis 2D Teilansichten einer Anlage zur Bearbeitung eines Krypton und Xenon enthaltenden Einsatzgemischs gemäß einer vorgeschlagenen Ausgestaltung in unterschiedlichen Betriebsmodi veranschaulichen;
Figuren 3A bis 3D Beladungen von Adsorptionsbetten in den in den Figuren 2A bis 2D veranschaulichten Betriebsmodi gemäß einer vorgeschlagenen Ausgestaltung in Form von Diagrammen veranschaulicht; und
Figur 4 Xenongehalte am Austritt eines Adsorptionsbehälters veranschaulicht.

### Ausführungsformen

Die nachfolgend beschriebenen Ausführungsformen und Ausgestaltungen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale vorgeschlagener Verfahren und Vorrichtungen nicht abschließend und/oder beschränkend betrachtet werden.

Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Ansprüche oder als Beschränkungen von Äquivalenten hierzu zu betrachten sind, und dass andere Ausführungsformen verwendet und Änderungen vorgenommen werden können, ohne vom Umfang der Ansprüche abzuweichen.

Unterschiedliche Ausführungsformen können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus können andere Ausgestaltungen umfasst sein, die gegenwärtig nicht beansprucht sind, die aber in Zukunft beansprucht werden könnten, insbesondere wenn sie vom Umfang der unabhängigen Ansprüche umfasst sind.

Erläuterungen, die sich auf Vorrichtungen, Apparate, Anordnungen, Systeme usw. gemäß vorgeschlagenen Ausführungsformen beziehen, können auch für Verfahren, Prozesse, Methoden usw. gemäß anderen Ausführungsformen gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Die Konjunktion "und/oder" soll, wenn in einer Aufzählung vor dem letzten Begriff der Aufzählung verwendet, so verstanden werden, dass alle in der Aufzählung zuvor und danach genannten Begriffe beliebig miteinander kombiniert werden können. Mit anderen Worten ist mit "A, B und/oder C" "A und/oder B und/oder C" oder "wenigstens eines der Elemente A, B und C in beliebiger Kombination" gemeint.

Ein "Betriebszyklus" zeichnet sich im hier verstandenen Sinn durch eine Abfolge von Verfahrensschritten bzw. "Betriebsmodi" aus, die sich in einem anderen Betriebszyklus in im Wesentlichen derselben Weise wiederholen. Im Fall eines Adsorptionsverfahrens handelt es sich im einfachsten Fall um einen Adsorptionsschritt gefolgt von einem Desorptionsschritt bzw. entsprechende Betriebsmodi. Aufgrund der Sättigung des Adsorbens mit der zu adsorbierenden Gaskomponente ist eine derartige, wiederholte, oder "zyklische" Abfolge von Verfahrensschritten erforderlich. Betriebszyklen können auch unterschiedliche Dauern der jeweiligen Verfahrensschritte umfassen, beispielsweise aufgrund sich ändernder Zusammensetzungen, Temperaturen und dergleichen. Typischerweise ändern sich die Verfahrensschritte selbst nicht. Insbesondere können aber zwischen unterschiedlichen Betriebszyklen Einspeiserichtungen, Flussrichtungen, Geschwindigkeiten usw. von Gasen in bestimmte Apparaturen umgekehrt bzw. geändert werden.

In einer Adsorptionsanordnung werden zur Gewährleistung eines kontinuierlichen Betriebs typischerweise zwei oder mehr Adsorptionseinheiten in Form von Adsorberbehältern, die mit einem geeigneten Adsorptionsmaterial gefüllt sind, bereitgestellt. Die Adsorberbehälter werden zeitlich zueinander versetzt betrieben, so dass sich stets zumindest eine der Adsorptionseinheiten im Adsorptionsmodus befindet und zumindest eine weitere Adsorptionseinheit zeitgleich regeneriert wird. Die Regenerierung kann insbesondere unter Verwendung eines Regeneriergasstroms erfolgen, der in erwärmtem Zustand und im Gegenstrom (in Bezug auf den Adsorptionsmodus) durch die Adsorptionseinheiten geführt wird. Ein derartiger Betrieb erfordert ein Umschalten zwischen den Adsorptionsbehältern.

In den nachfolgend erläuterten Figuren sind Komponenten vergleichbarer oder identischer Funktion und/oder Bauart mit identischen Bezugszeichen angegeben. Auf wiederholte Erläuterungen wird lediglich aus Gründen der Übersichtlichkeit halber verzichtet. Erklärungen, die sich auf Anlagen oder deren Komponenten beziehen, gelten für hiermit durchgeführte Verfahrensschritte entsprechend und umgekehrt.

Die Herstellung von Krypton und Xenon auf Basis der kryogenen Luftzerlegung kann in drei Untereinheiten oder Schritten erfolgen, auf die typischerweise mit C1, C2 und C3 Bezug genommen wird. Die C1-Einheit oder der C1-Schritt ist in der Regel Teil einer Luftzerlegungsanlage oder wird in einer solchen durchgeführt, wie eingangs beschrieben. Hierbei wird sogenanntes Roh-Krypton/Xenon gebildet, das vergleichsweise geringe Konzentrationen von Krypton und Xenon aufweist und etwa 99,3 % Sauerstoff enthält. Dieses kann in Ausgestaltungen der vorliegenden Erfindung als ein Einsatzgemisch verwendet werden.

Das Roh-Krypton/Xenon aus mehreren Luftzerlegungsanlagen kann gesammelt und zu einer C2-Anlage transportiert werden. Ausgestaltungen der vorliegenden Erfindung können insbesondere eine derartige C2-Anlage bzw. ein hierin durchgeführtes Verfahren betreffen. Ein C2-Schritt dient zur Reinigung des Roh-Krypton/Xenons, hauptsächlich durch Entfernen des Sauerstoffs und katalytisches Umsetzen von Methan, das sich ebenfalls im Roh-Krypton/Xenon befinden kann, da es sich im Hauptkondensator einer Luftzerlegungsanlage anreichert.

Das Produkt der C2-Anlage bzw. eines entsprechenden Verfahrensschritts stellt im Wesentlichen ein Gemisch aus Krypton und Xenon mit Spuren von Verunreinigungen dar. Der entfernte Sauerstoff wird üblicherweise als gasförmiges Sauerstoffprodukt bei niedrigem Druck verwendet. In mehreren C2-Anlagen gebildete Gemische können einer C3-Anlage bzw. einem entsprechenden Verfahrensschritt zugeführt werden, um reines Krypton und Xenon zu erzeugen. Die Bezeichnung der Einheiten oder Schritte mit C1, C2, C3 ist nicht einschränkend und die vorliegende Erfindung kann mit anderen Anordnungen von Anlagenteilen oder Verfahrensschritten verwendet werden.

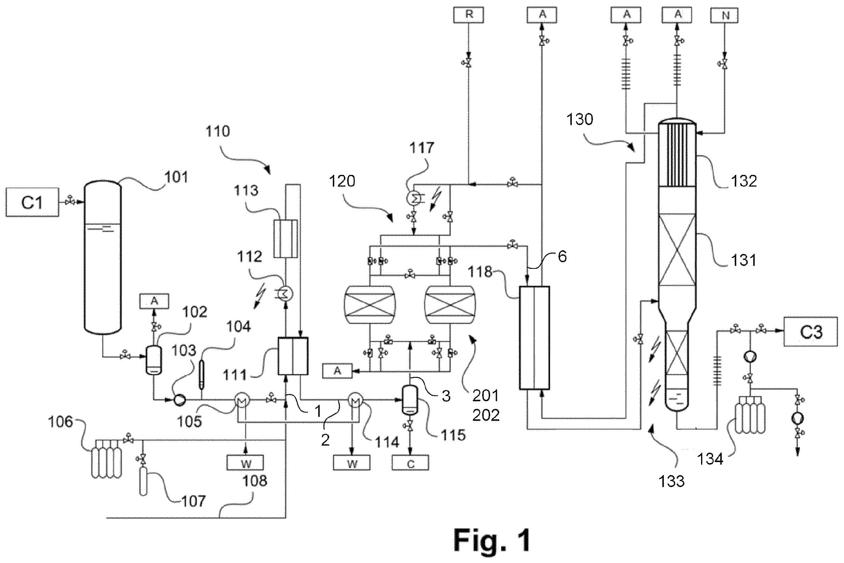

Figur 1 zeigt eine Anlage zur Bearbeitung eines Krypton, Xenon, Methan und Sauerstoff enthaltenden Einsatzgemischs, insbesondere des mehrfach erwähnten Roh-Krypton/Xenons. Die in Figur 1 veranschaulichte Anlage kann Ausgestaltungen der vorliegenden Erfindung zugrunde liegen, stellt aber selbst nicht notwendigerweise Ausgestaltung der vorliegenden Erfindung dar.

Die in Figur 1 veranschaulichte Anlage kann eine herkömmliche C2-Einheit darstellen, wie sie soeben erläutert wurde. Die Anlage kann beispielsweise einen Tank 101 umfassen, der beispielsweise über Tanklaster mit Roh-Krypton/Xenon aus mehreren C1-Einheiten befüllt werden kann, wie in Figur 1 abstrahiert mit C1 angegeben. Das Roh-Krypton/Xenon aus Tank 101 kann, wie erwähnt, als das an anderer Stelle dieser Offenbarung als Einsatzgemisch bezeichnete Komponentengemisch darstellen.

Das Einsatzgemisch kann in einen Trennbehälter 102 geleitet werden, aus dem ein Flashgas an die Atmosphäre A abgelassen oder wieder verflüssigt und in den Tank zurückgeleitet werden kann. Die Flüssigkeit aus dem Trennbehälter 102 kann mithilfe einer Pumpe 103 gepumpt, teilweise in einem Pufferbehälter 104 gepuffert und durch einen Wärmetauscher 105 geleitet werden, der mit Wasser W, Dampf oder Umgebungsluft betrieben wird, bevor sie optional mit weiteren Flüssigkeiten aus Tanks oder Druckgasbehältern 106 und 107, wie beispielsweise einem extern bereitgestellten Produkt einer C2-Einheit aus einem Tank 106, einem Gas aus einem Gasballon einer C3-Einheit aus einem Tank 107 oder einem Gas aus einem Sammler für gasförmigen Sauerstoff 108 einer weiteren C2-Einheit, vereinigt werden. Die Einheiten 102 bis 105 können in unterschiedlicher Anzahl in der Anlage bereitgestellt werden und jeweils einen Teil des Roh-Krypton/Xenons aufnehmen.

Das Roh-Krypton/Xenon wird in der in Figur 1 veranschaulichten Anlage anschließend in Form eines Stoffstroms 1 einer Katalyseanordnung 110 zugeführt, die einen Gegenstromwärmetauscher 111, einen (elektrischen) Heizer 112, ein Katalysatorbett 113, einen mit Wasser W betriebenen Kühler 114 und einen Kondensatorbehälter 115 zum Entfernung eines Kondensats C aufweist. Im Katalysatorbett 113 der Katalyseanordnung 110 können Spuren von Methan, die in dem Roh-Krypton/Xenon enthalten sind, in Kohlendioxid und Wasser umgewandelt werden. Das entstehende Wasser (und gegebenenfalls bereits zuvor vorhandenes Wasser) kann in einem Kondensatorbehälter 115 zu Kondensat C kondensiert werden.

Es sei betont, dass die Beschreibung bestimmter Anlagenkomponenten oder Apparate als zu einer Untereinheit, beispielsweise der Katalyseanordnung 110, gehörig nicht einschränkend zu verstehen ist und lediglich zur Bezugnahme dient.

Ein Stoffstrom 2 aus der Katalyseanordnung 110, oder ein Teil hiervon in Form eines entsprechenden Stoffstroms 3, wird einer Adsorptionsanordnung 120 zugeführt, die ein Paar Adsorberbehälter 201, 202 aufweist. Diese können beispielsweise ein Molsiebmaterial als Adsorptionsmittel aufweisen, das zur Regenerierung unter Verwendung eines Regeneriergases R eingerichtet ist. Als Regeneriergas R kann beispielsweise gasförmiger Stickstoff oder sogenannter Abfallsauerstoff verwendet werden. Das Regeneriergas R kann mittels eines elektrischen Heizers 117 erhitzt und nach der Verwendung zur Regeneration in der Adsorptionsanordnung 120 als beladener Adsorptionsgasstrom an die Atmosphäre A abgegeben werden. In der Adsorptionsanordnung 120 werden insbesondere Wasser und Kohlendioxid adsorbiert und das hierdurch aufgereinigte Roh-Krypton/Xenon kann in Form eines Stoffstrom 6 über einen Gegenstromwärmetauscher 118 zu einer Rektifikationsanordnung 130 geleitet werden.

Die Rektifikationsanordnung 130 weist in dem in Figur 1 dargestellten Beispiel eine einzelne Rektifikationskolonne 131 mit einem Kopfkondensator 132 und Rückverdampfern 133 auf, die elektrisch betrieben werden können. Der Kopfkondensator 132 wird mit flüssigem Stickstoff N gekühlt, der in einem Verdampfungsraum des Kopfkondensators 132 verdampft und anschließend beispielsweise in die Atmosphäre A abgeblasen wird wie in Figur 1 dargestellt, wobei der entsprechende Stoffstrom links aus dem Kopfkondensator 132 abgezogen wird. Ein Sumpfstrom aus der Rektifikationskolonne 131 kann an eine C3-Einheit oder einen entsprechenden Reaktionsschritt weitergeleitet werden, wie mit C3 angegeben, oder in einem Zylinderbündel 134 gespeichert oder an einen Speicherbehälter weitergeleitet werden. Derartige Optionen sind in Figur 1 nicht gesondert dargestellt.

Im Beispiel der Figur 1 wird Kopfgas aus der Rektifikationskolonne 131 als Abfallsauerstoff, mit oder ohne Durchlauf durch den Gegenstromwärmetauscher 118, an die Atmosphäre A abgeblasen oder teilweise als das Regenerationsgas R zur Regeneration der Adsorptionseinheit 120 verwendet, wie zuvor anhand des Regenerationsgases R erläutert.

In der Anlage gemäß Figur 1 kann das Roh-Krypton/Xenon, und damit der erste Stoffstrom, beispielsweise ca. 200 ppm Xenon und 2500 ppm Krypton, geringfügige Mengen an Methan und im verbleibenden Rest von typischerweise mehr als 99 Molprozent Sauerstoff enthalten. Das Roh-Krypton/Xenon wird in der Adsorptionseinrichtung 120 über einen klassischen Molsiebprozess gereinigt. Insbesondere Wasser und Kohlendioxid werden in der Adsorptionseinrichtung 120 adsorptiv zurückgehalten. Ein Nachteil besteht allerdings darin, dass in der Adsorptionseinrichtung 120 auch Krypton und insbesondere Xenon adsorbiert werden. Beim Wechsel der Adsorberbehälter 201, 202, d.h. einem Druckabbau und der Regeneration, kommt es daher zum Verlust der adsorbierten Edelgase, insbesondere von Xenon, da das beladene Regeneriergas in herkömmlichen Verfahren typischerweise an die Atmosphäre A abgegeben wird.

Hier setzen Ausgestaltungen der vorliegenden Erfindung an. Ziel ist es hierbei, eine möglichst hohe Ausbeute der im Roh-Krypton/Xenon enthaltenen Edelgase Krypton und Xenon zu ermöglichen. Mit anderen Worten sollen die Produktverluste im Prozess, insbesondere im Molsiebprozess, auf ein Minimum reduziert werden.

Die soeben angesprochenen Aspekte können durch Messungen belegt werden. So kann bei einer Messung von Xenon am Ausgang der Adsorberbehälter 201, 202 nach einer Einleitung des Adsorptionsbetriebs festgestellt werden, dass insbesondere Xenon für ca. 20 min oder eine halbe Stunde nicht mehr nachzuweisen ist. Dies belegt, dass Xenon in einem derartigen Zeitraum vollständig vom Adsorptionsmaterial adsorbiert wird. Während dieser Zeit strömt praktisch reiner Sauerstoff aus dem entsprechenden Adsorberbehälter 201, 202 ab, da Wasser und Kohlendioxid ebenfalls adsorbieren.

Entsprechend gereinigtes Gas wird in dem vorgeschlagenen Verfahren und seinen Ausgestaltungen nun auf die Feedseite des zu regenerierenden Adsorberbehälters 201, 202 gefahren. Während die stark adsorbierenden Komponenten Wasser und adsorbiert bleiben, werden Xenon und Krypton aus diesem zu regenerierenden Adsorberbehälter 201, 202 zunächst in Richtung der Zerlegungsanlage, d.h. der kryogenen Trennanordnung, herausgespült. Der Verlust der adsorbierten Anteile dieser beiden Wertstoffe kann dadurch fast vollständig vermieden werden. Kurz bevor der entsprechende Adsorberbehälter 201, 202 mit Xenon voll beladen ist, wird der serielle Betrieb beendet und das Gas aus dem entsprechenden Adsorberbehälter 201, 202 strömt direkt zur Zerlegungseinheit. So wird die neuerliche Adsorption von Xenon und Krypton in dem zu regenerierenden Adsorptionsbehälter 201, 202 verhindert. Nach dieser Zeit steigt die Austrittskonzentration von Xenon an, bis dieses auf einem ähnlichen Wert wie die Eintrittskonzentration vorliegt.

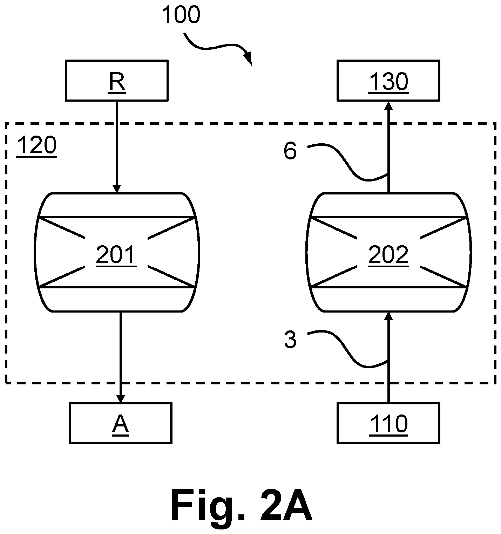

In den Figuren 2A bis 2D sind Teilansichten einer Anlage gemäß einer Ausgestaltung der Erfindung in unterschiedlichen Betriebsmodi veranschaulicht und jeweils mit 100 bezeichnet. Die Einbindung der in den Figuren 2A bis 2D veranschaulichten Komponenten ergibt sich insbesondere aus der entsprechenden Bezeichnung der Katalyseanordnung 110 und der Rektifikationsanordnung 130, die identisch oder vergleichbar wie zu der in Figur 1 veranschaulichten Anlage ausgebildet sein können. Ebendies gilt für die Stoffströme 3 und 6. Die Adsorberbehälter sind in den Figuren 2A bis 2D wie zuvor mit 201 und 202 bezeichnet.

Wie in Figur 2A veranschaulicht, befindet sich der Adsorberbehälter 202 in einem Adsorptionsmodus, der hier auch als "erster Betriebsmodus" bezeichnet wird, und ist damit zwischen die Katalyseanordnung 110 und die Rektifikationsanordnung 130 eingebunden. Auf diese Weise kann der zuvor erwähnte dritte Stoffstrom 3 in dem Adsorberbehälter 202 von Wasser und Kohlendioxid befreit werden und ein entsprechend gereinigter Stoffstrom 6 strömt in die Rektifikationsanordnung 130. Der Adsorberbehälter 201 befindet sich zeitgleich in einem Regenerationsbetrieb, der hier auch als "dritter Betriebsmodus" bezeichnet wird, wobei Regeneriergas R durch den Adsorberbehälter 201 strömt und beispielsweise an die Atmosphäre A abgegeben wird.

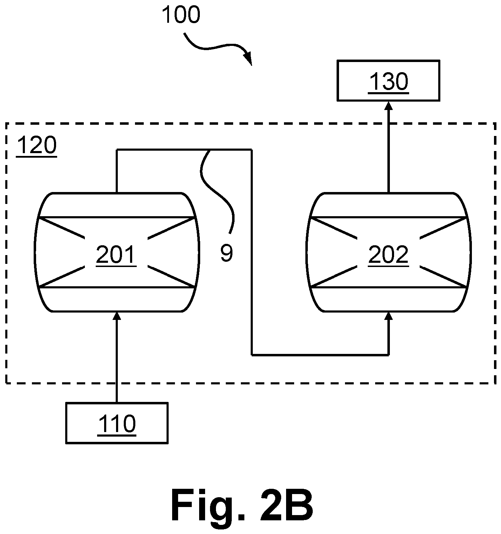

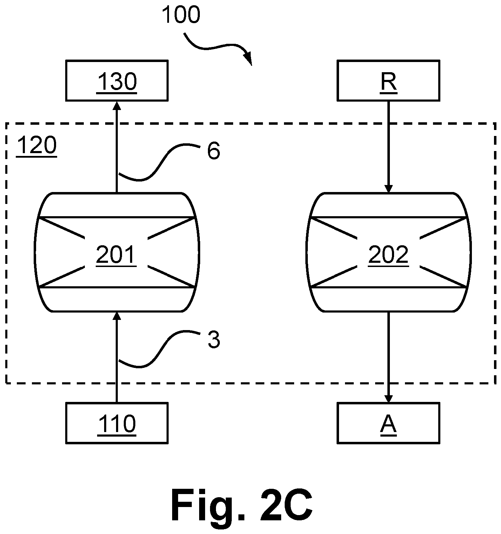

Nach vollständiger Beladung des Adsorberbehälters 202 und entsprechend vollständiger Regeneration des Adsorberbehälters 201 wird herkömmlicherweise nach einer entsprechenden Druckentlastung des Adsorberbehälters 202 und einem Druckaufbau in dem Adsorberbehälter 201 jeweils zwischen Adsorptions- und Regenerationsmodus umgeschaltet, so dass sich ein Zustand gemäß Figur 2C ergibt. Im Gegensatz dazu wird in dem hier vorgeschlagenen Verfahren und der Anlage 100 ein Zwischenschritt durchgeführt, der in Figur 2B dargestellt ist.

Auch in dem vorgeschlagenen Verfahren wird ein Druckaufbau in Adsorberbehälter 201 vorgenommen, allerdings zunächst noch keine Druckentlastung in Adsorberbehälter 202. Der Druckaufbau in Adsorberbehälter 201 erfolgt insbesondere durch Einleiten des Gases 3 auch in den Adsorberbehälter 201.

Wie in Figur 2B veranschaulicht, wird in einem entsprechenden Zwischenschritt, der hier bezüglich des Adsorberbehälters 202 hier auch als "zweiter Betriebsmodus" und hinsichtlich des Adsorberbehälters 201 hier auch als "vierter Betriebsmodus" bezeichnet wird, aus dem Adsorberbehälter 201 ausströmendes Gas, wie in Figur 2B in Form eines Stoffstroms 9 veranschaulicht, in den Adsorberbehälter 202 überführt, während aus dem Adsorberbehälter 202 ausströmendes Gas in die Rektifikationsanordnung 130 überführt wird.

In dem zweiten und vierten Betriebsmodus befinden sich beide Adsorberbehälter 201, 202 auf Druck, und es schließt sich bezüglich Adsorberbehälter 202 eine Druckentlastung, beispielsweise an die Atmosphäre, an.

Nach der einer Druckentlastung und einer entsprechenden Umschaltung wird, wie in Figur 2C veranschaulicht, der Adsorberbehälter 202 im konventionellen Regenerationsmodus betrieben, während der Adsorberbehälter 201 sich nun im Adsorptionsmodus befindet. Das Regenerationsgas R strömt dabei in Gegenrichtung zu einem üblichen Feedgas 3 durch den Adsorberbehälter 202.

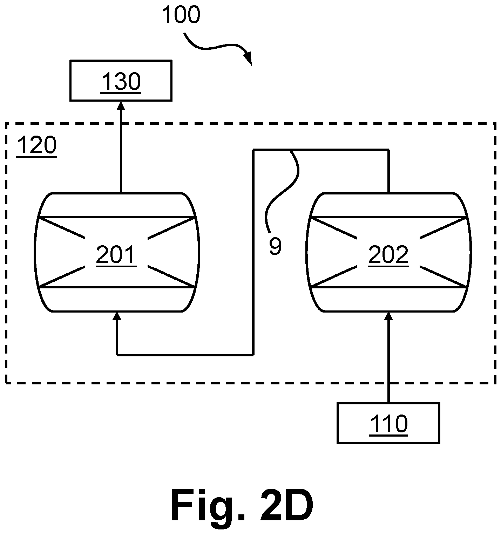

Figur 2D veranschaulicht einen weiteren Zwischenschritt, der im Wesentlichen dem Zwischenschritt 2B entspricht, wobei jedoch der Betrieb der Adsorberbehälter 201, 202 gegenüber dem Zwischenschritt 2B vertauscht ist.

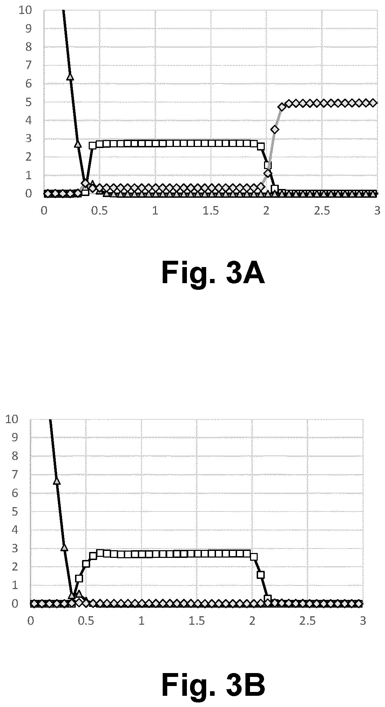

In den Figuren 3A bis 3D sind Beladungszustände der jeweiligen Adsorptionsbetten in dem Katalysatorbett des Adsorberbehälters 202 gemäß Figuren 2A bis 2D veranschaulicht, wobei sich versteht, dass die entsprechenden Erläuterungen auch für den Adsorberbehälter 201 in einem anschließenden Betriebszyklus gelten. Die Beladungszustände sind dabei jeweils für das Ende eines entsprechenden Betriebsmodus veranschaulicht.

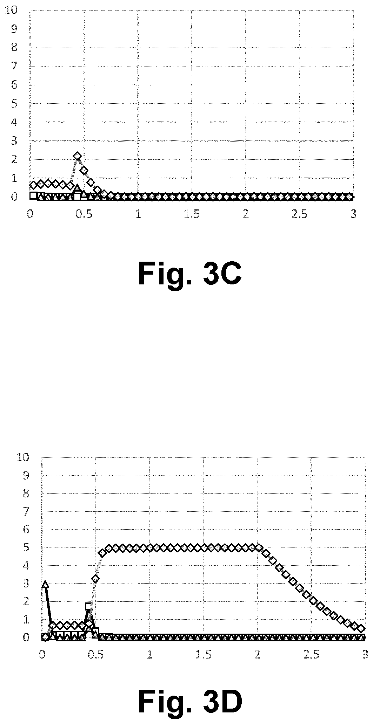

In allen Figuren 3A bis 3D sind dabei die Beladungszustände mit Kohlendioxid in Form von liegenden Quadraten, mit Wasser in Form von Dreiecken, und mit Xenon in Form von auf der Spitze stehenden Quadraten in dimensionslosen Größen auf der Vertikalachse gegenüber einer Bettlänge des Katalysatorbetts in Metern auf der Horizontalachse dargestellt. Die Durchströmungsrichtung in dem ersten, zweiten und vierten Betriebsmodus ist dabei von links nach rechts in den Figuren 3A, 3B und 3D zu verstehen, in dem dritten Betriebsmodus gemäß Figur 3C ist sie umgekehrt. Die Beladungszustände mit Xenon sind dabei mit dem Faktor 1000 multipliziert, um eine zeichnerische Vergleichbarkeit sicherzustellen.

Wie erwähnt, betrifft Figur 3A das Ende des ersten Betriebsmodus für den Adsorberbehälter 202 gemäß Figur 2A. Wie dargestellt, ist der Adsorberbehälter 202 am Beginn des Adsorptionsbetts bis zu ca. 0,5 Metern stark mit Wasser beladen. Es schließt sich ein Bereich von ca. 0,5 Metern bis 2 Metern an, in dem der Adsorberbehälter 202 im Wesentlichen mit Kohlendioxid beladen ist. Am Ende des Adsorptionsbetts von ca. 2 Metern bis 3 Metern schließt sich ein Bereich an, in dem im Wesentlichen eine Beladung mit Xenon erfolgt ist. Dieses ginge bei einer konventionellen, sich direkt anschließenden Regenerierung verloren.

Wie ebenfalls erwähnt, betrifft Figur 3B das Ende des zweiten Betriebsmodus für den Adsorberbehälter 202 gemäß Figur 2B. Dieser zweite Betriebsmodus zeichnet sich dadurch aus, dass, wie erwähnt, im Wesentlichen reiner Sauerstoff aus dem anderen Adsorberbehälter 201 in den Adsorberbehälter 202 überführt wird. Das am Ende des Adsorptionsbetts von ca. 2 Metern bis 3 Metern zuvor adsorbierte Xenon kann auf diese Weise aus dem Adsorberbehälter 202 ausgetragen und in die nachgeschaltete Rektifikationsanordnung 130 übertragen werden.

Am Ende des dritten Betriebsmodus für den Adsorberbehälter 202 gemäß Figur 3C bzw. 2C, der einem üblichen Regenrationsbetrieb betrifft, sind die Komponenten im Wesentlichen von dem Adsorptionsbett entfernt.

Am Ende des vierten Betriebsmodus für den Adsorberbehälter 202 gemäß Figur 3D bzw. 2D, ist im Wesentlichen Xenon in einem Bereich von 0,5 Metern bis zu 2 Metern und teilweise bis zum Ende adsorbiert.

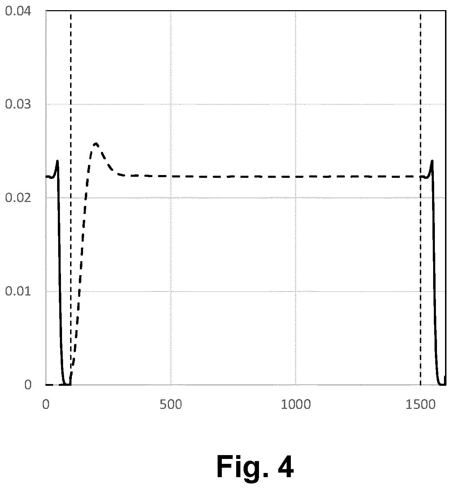

In Figur 4 ist der Zeitverlauf des Xenon-Gehalts am Austritt der Adsorptionseinheit 120 gemäß einer hier vorgeschlagenen Ausgestaltung veranschaulicht. Dies entspricht dem Xenon-Gehalt in dem der Rektifikationseinheit 130 zugeführten Gasstrom.

Auf der Vertikalachse ist dabei ein Xenongehalt am Austritt der Adsorptionseinheit 120 in Prozent dargestellt, die Horizontalachse veranschaulicht eine Zeit in Minuten. Mit vertikalen gestrichelten Linien sind die Betriebsmodi abgegrenzt, wobei in einem Bereich bis ca. 100 Minuten das Produkt aus dem jeweils im zweiten Betriebsmodus befindlichen Adsorber stammt, in einem Bereich von ca. 100 bis 1.500 Minuten aus dem im ersten Betriebsmodus befindlichen Adsorber stammt und in einem Bereich ab ca. 1.500 Minuten wieder aus einem im zweiten Betriebsmodus.

## Patentansprüche

1. Verfahren zum Bearbeiten eines Krypton, Xenon, Methan und Sauerstoff enthaltenden Einsatzgemischs (1), wobei eine Katalyseanordnung (110), eine Adsorptionsanordnung (120) mit zwei Adsorberbehältern (201, 202) und eine Rektifikationsanordnung (130) verwendet wird, wobei
jeder der Adsorberbehälter (201, 202) nacheinander in einem ersten Betriebsmodus, einem zweiten Betriebsmodus, einem dritten Betriebsmodus und einem vierten Betriebsmodus betrieben wird,
die Adsorberbehälter (201, 202) derart zeitlich versetzt zueinander betrieben werden, dass immer dann einer der Adsorberbehälter (201, 202) in dem zweiten Betriebsmodus betrieben wird, wenn der andere der Adsorberbehälter (201, 202) in dem vierten Betriebsmodus betrieben wird,
dem Adsorberbehälter (201, 202) in dem ersten Betriebsmodus Gas aus der Katalyseanordnung (110) zugeführt wird und Gas entnommen wird, das der Rektifikationsanordnung (130) zugeführt wird,
dem Adsorberbehälter (201, 202) in dem zweiten Betriebsmodus Gas aus dem anderen Adsorberbehälter (201, 202) zugeführt wird und Gas entnommen wird, das der Rektifikationsanordnung (130) zugeführt wird,
dem Adsorberbehälter (201, 202) in dem dritten Betriebsmodus ein Regeneriergas (R) zugeführt wird und Gas entnommen wird, das nicht der Rektifikationsanordnung (130) zugeführt wird,
dem Adsorberbehälter (201, 202) in dem vierten Betriebsmodus Gas aus der Katalyseanordnung (110) zugeführt wird und Gas entnommen wird, das dem anderen Adsorberbehälter (201, 202) zugeführt wird.

2. Verfahren nach Anspruch 1, wobei das Gas aus der Katalyseanordnung (110) Krypton, Xenon, Wasser und Kohlendioxid enthält.

3. Verfahren nach Anspruch 2, wobei eine Dauer des zweiten Betriebsmodus und des vierten Betriebsmodus derart bemessen wird, dass das in dem zweiten Betriebsmodus aus der Rektifikationsanordnung (130) zugeführte Gas weniger als eine vorgegebene Menge an Wasser und Kohlendioxid aufweist.

4. Verfahren nach Anspruch 3, wobei die Dauer des zweiten Betriebsmodus und des vierten Betriebsmodus derart bemessen wird, dass Xenon in weniger als einer vorgegebenen Menge zwischen den Adsorberbehältern (201, 202) übertragen wird.

5. Verfahren nach einem der Ansprüche 3 oder 4, wobei die Dauer des zweiten Betriebsmodus identisch zur Dauer des vierten Betriebsmodus ist.

6. Verfahren nach einem der Ansprüche 3 bis 5, wobei die Ermittlung der Dauer des zweiten Betriebsmodus und des vierten Betriebsmodus auf Grundlage einer Messung eines Gehalts von Xenon, Kohlendioxid und/oder Wasser erfolgt.

7. Verfahren nach einem der Ansprüche 3 bis 5, wobei die Ermittlung der Dauer des zweiten Betriebsmodus und des vierten Betriebsmodus auf Grundlage einer Prognose eines Gehalts von Xenon, Kohlendioxid und/oder Wasser erfolgt.

8. Verfahren nach einem der vorstehenden Ansprüche bei dem der erste, zweite und vierte Betriebsmodus auf einem ersten Druckniveau durchgeführt werden, und der dritte Betriebsmodus auf einem zweiten Druckniveau unterhalb des ersten Druckniveaus durchgeführt wird.

9. Verfahren nach einem der vorstehenden Ansprüche, wobei unter Verwendung der Katalyseanordnung (110) das Methan in dem Einsatzgemisch, oder ein Teil hiervon, mit Sauerstoff zu Wasser und Kohlendioxid umgesetzt wird.

10. Verfahren nach einem der vorstehenden Ansprüche, wobei das in dem ersten Betriebsmodus und in dem zweiten Betriebsmodus der Rektifikationsanordnung (110) zugeführte Gas Sauerstoff, Krypton und Xenon enthält und dieses Gas in der Rektifikationsanordnung (110) an Sauerstoff abgereichert wird.

11. Verfahren nach einem der vorstehenden Ansprüche, wobei das in dem dritten Betriebsmodus nicht der Rektifikationsanordnung (130) zugeführte Gas, oder ein Teil hiervon, an die Atmosphäre (A) abgegeben wird.

12. Anlage (100) zum Bearbeiten eines Krypton, Xenon, Methan und Sauerstoff enthaltenden Einsatzgemischs (1), mit einer Katalyseanordnung (110), einer Adsorptionsanordnung (120) und einer Rektifikationsanordnung (130) mit zwei Adsorberbehältern (201, 202), wobei die Anlage (100) dafür eingerichtet ist,
jeden der Adsorberbehälter (201, 202) nacheinander in einem ersten Betriebsmodus, einem zweiten Betriebsmodus, einem dritten Betriebsmodus und einem vierten Betriebsmodus zu betreiben,
die Adsorberbehälter (201, 202) derart zeitlich versetzt zueinander zu betreiben, dass immer dann einer der Adsorberbehälter (201, 202) in dem zweiten Betriebsmodus betrieben wird, wenn der andere der Adsorberbehälter (201, 202) in dem vierten Betriebsmodus betrieben wird,
dem Adsorberbehälter (201, 202) in dem ersten Betriebsmodus Gas aus der Katalyseanordnung (110) zuzuführen sowie Gas zu entnehmen und der Rektifikationsanordnung (130) zuzuführen,
dem Adsorberbehälter (201, 202) in dem zweiten Betriebsmodus Gas aus dem anderen Adsorberbehälter (201, 202) zuzuführen sowie Gas zu entnehmen und der Rektifikationsanordnung (130) zuzuführen,
dem Adsorberbehälter (201, 202) in dem dritten Betriebsmodus ein Regeneriergas (R) zuzuführen sowie Gas zu entnehmen und nicht der Rektifikationsanordnung (130) zuzuführen,
dem Adsorberbehälter (201, 202) in dem vierten Betriebsmodus Gas aus der Katalyseanordnung (110) zuzuführen wird sowie Gas zu entnehmen und dem anderen Adsorberbehälter (201, 202) zuzuführen.

13. Anlage (100) nach Anspruch 12, die zur Durchführung eines Verfahrens nach einem der Ansprüche 1 bis 11 eingerichtet ist.
